# EUROPÄISCHE PATENTSCHRIFT

(11) **EP 1 163 998 B1**
(45) Veröffentlichungstag und Bekanntmachung des Hinweises auf die Patenterteilung: **30.06.2004**
(21) Anmeldenummer: 01108528.9
(22) Anmeldetag: 04.04.2001
(51) Int. Cl.: B29C 65/08, B29C 65/74, B29C 59/02

(54) **Verfahren und Vorrichtung zum Herstellen mehrlagiger Produkte**
Process and apparatus for making multilayered products
Procédé et dispositif pour la fabrication de produits multi-couches

(30) Priorität: 16.06.2000 DE 10029797
(43) Veröffentlichungstag der Anmeldung: 19.12.2001
(60) Teilanmeldung: 02013184.3
(73) Patentinhaber: Eul & Günther GmbH, 46446 Emmerich (DE)
(72) Erfinder: Pommeranz, Wilfried, 46446 Emmerich (DE); Rüttermann, Rolf, 46446 Emmerich (DE); Ueffing, Heinz, 46446 Emmerich (DE)
(74) Vertreter: Grünecker, Kinkeldey, Stockmair & Schwanhäusser Anwaltssozietät

(56) Entgegenhaltungen:
- WO-A-92/05959
- DE-A- 2 836 279
- DE-B- 2 200 729
- FR-A- 2 787 058
- GB-A- 2 328 650
- US-A- 3 614 383
- US-A- 3 939 033
- US-A- 4 025 374
- US-A- 4 256 529
- US-A- 4 847 934
- US-A- 5 017 257
- US-A- 5 934 043
- US-A- 5 985 065
- US-A- 6 120 629
- PATENT ABSTRACTS OF JAPAN vol. 013, no. 400 (M-867), 6. September 1989 (1989-09-06) & JP 01 145122 A (MITSUO FUJISAWA), 7. Juni 1989 (1989-06-07)

## Beschreibung

Die Erfindung bezieht sich auf ein Verfahren zum Herstellen mehrlagiger Produkte und eine Vorrichtung zum Durchführen des Verfahrens.

Aus der Gebrauchsgüter- und Verpackungsindustrie sind mehrlagige gewebeartige Produkte bekannt, die aus einer oder mehreren Stofflagen bestehen. Bei zwei oder mehr Stofflagen bestehen die Stofflagen aus thermoplastischem Material. Solche Produkte sind beispielsweise als leichte Einweg-Kopfkissenüberzüge für Kopfkissen in Flugzeugen oder Bussen, Rücklehnenüberzüge, Waschlappen oder -handschuhe in Hotels oder öffentlichen Gebäuden, als Staubsaugerbeutel oder auch als Kopfhauben für Köche oder Reinigungspersonal bekannt. Sie bestehen aus einer Gewebestruktur, sogenannten wovens, oder einer Vlies- oder Faserstruktur, sogenannten non-wovens. Diese mehrlagigen Produkte werden häufig als Beutel mit einer Öffnung, als Hauben oder auch als geschlossene Beutel zum geschützten Aufbewahren von Artikeln angeboten.

Es ist bei der Herstellung derartiger Produkte bekannt, mehrere Stofflagen aufeinander zu legen oder eine einzelne Stofflagenbahn zu mehreren Lagen zu falten und durch Aufbringen von Wärme von außen thermisch zu verschweißen. Die Stofflagen werden einer Maschine in Form von Bahnen zugeführt, wobei nach dem thermischen Verschweißen in der Regel auch das Material thermisch geschnitten wird, um Einzelstücke zu erhalten. Als Alternative wird die Stückelung durch mechanisches Schneiden vollzogen.

Bei anderen Verfahren werden solche Materialien unter Aufbringung von Hilfsstoffen miteinander verschweißt. Hier bestehen jedoch beschränkte Einsatzmöglichkeiten, da nur gleichartige oder geschmolzene Materialien verwendet werden können. Zudem ist dabei stets ein gleiches Temperaturverhalten der beteiligten Materialien zu beachten.

Femer ist es bekannt, Kunststoffe mit Hilfe von Ultraschall miteinander zu verschweißen. Für eine Ultraschallverschweißung wird ein getaktetes Verfahren verwendet. Dabei bestehen Bedenken, dass die Schweißnaht nicht genügend Festigkeit hat und es hat sich gezeigt, dass dies Verfahren Kostennachteile hat.

In der Druckschrift DE 44 39 284 C3 wird vorgeschlagen, eine aus mehreren Lagen bestehende Materialbahn mit Hilfe einer Ultraschallschwingeinheit entweder fest zu verschweißen oder zu durchschneiden.

Die US-A-5 934 043 offenbart eine Vorrichtung zum Verschweißen und Ausschneiden von zweilagigen gefüllten Papierbehältern, wie z.B. Teebeuteln. Die Vorrichtung weist einen Amboss auf, der Teil einer Ultraschallvorrichtung ist. Gegenüber dem Amboss ist eine rotierbare Schneidewalze mit voneinander beabstandeten ringförmigen Vertiefungen vorgesehen, um deren Ränder Schneidekanten zum Ausschneiden verschweißter Teebeutel aus dem Materialverbund ausgebildet sind. Mit der Vorrichtung werden die Teebeutel an ihren Rändern fest verschweißt und aus dem Materialverbund herausgeschnitten.

Die US-A-4 025 374 zeigt eine Vorrichtung zum Herstellen von mehrschichtigen haken- oder ösentragenden Miederwaren. Die Vorrichtung weist einen quaderförmigen Amboss auf, gegenüber welchem eine Sonotrode mit einer Schneidekante und seitlichen Druckkanten ausgebildet ist. Um die haken- oder ösentragenden Stoffbahnen zu verschweißen, werden die Bahnen in einem zeitlich gestuften Rhythmus der Schweißvorrichtung zugeführt und dann verschweißt.

Der Erfindung liegt die Aufgabe zugrunde, ein Verfahren und eine Vorrichtung zum Herstellen mehrlagiger Produkte zu schaffen, mit welchen bei hoher Produktionsgeschwindigkeit ein mehrlagiges Produkt mit hoher Qualität der Verbindungsstelle hergestellt werden kann.

Diese Aufgabe wird erfindungsgemäß gelöst mit einem Verfahren zum Herstellen mehrlagiger Produkte, wobei mindestens zwei Stofflagen, von welchen mindestens eine Stofflage einen thermoplastischen Materialanteil aufweist, fortlaufend einer Ultraschall-Arbeitsstation zugeführt werden, an welcher ein Ambosselement rotierend gegenüber einer Ultraschall-Sonotrode angetrieben wird, und die Stofflagen in einem Arbeitsschritt gleichzeitig durch Ultraschall-Schweißen miteinander verbunden werden und die Schweißstelle zu einer Solltrennstelle geschwächt wird.

Durch das Ultraschallschweißen wird neben der rein stofflichen Verbindung die entstehende Schweißstelle durch den Schweißvorgang selbst zusätzlich geschwächt, bis sie eine Solltrennstelle bildet, an welcher das kontinuierlich zugeführte Produkt nachfolgend in Einzelstücke getrennt werden kann. Das Verschweißen und das Schwächen der Schweißstelle zu einer Solltrennstelle erfolgt in einen Schritt mit dem Ultraschallschweißen und spart somit gegenüber herkömmlichen Verfahren sehr viel Zeit. Es sind wesentlich höhere Produktionsgeschwindigkeiten erreichbar. Das kontinuierliche Zuführen der Stofflagenbahnen ermöglicht in Kombination mit dem rotierenden Ambosselement einen fortlaufenden Prozess mit hoher Geschwindigkeit.

Es lassen sich Schweißstellen herstellen, die sehr klein sind, aber trotzdem ausreichend Festigkeit haben. Beispielsweise kann eine damit hergestellte Schweißnaht eine Breite von weniger als einem halben Millimeter haben, obwohl die beiden Stofflagen damit ausreichend reißfest miteinander verbunden sind. Erstaunlicherweise ist die verbleibende Schweißstelle jedes Einzelprodukts sehr weich, so dass die Produkte auch zur Anwendung im körpernahen Bereich, z.B. als Kopfkissenbezüge, verwendbar sind.

Vorzugsweise kann die Schweißstelle bis zu einer Zugfestigkeit geschwächt werden, welche geringer ist als die Zugfestigkeit der nichtgeschweißten Stofflagen. Dadurch können die Einzelstücke durch Zugbeanspruchung der Solltrennstelle voneinander getrennt werden, wobei die geschweißten Stofflagen eines Einzelstücks miteinander verbunden bleiben.

Besonders vorteilhaft kann der Grad der Schwächung der Schweißstelle über eine Veränderung des lichten Spaltes zwischen der Ultraschall-Sonotrode und dem Ambosselement eingestellt werden. Dies ermöglicht es, die Solltrennstelle in der gewünschten Stärke einzustellen, z.B. durch lineares Justieren der Position der Sonotrode oder des Ambosselements.

Günstigerweise können die Stofflagen mit einer Bahngeschwindigkeit von etwa 70 bis 200 m/min, vorzugsweise 150 bis 200 m/min, der Ultraschall-Arbeitsstation zugeführt werden. Dies ist eine Produktionsgeschwindigkeit, welche mit den bekannten Verfahren des thermischen Verschweißens oder getakteten Verfahren, welche in einem Bereich von etwa 40 m/min liegen, nicht erreichbar war.

In besonderer Weise kann das Ambosselement während des Ultraschallschweißvorgangs mit einer Umfangsgeschwindigkeit etwa entsprechend der Geschwindigkeit der Stofflagenbahn gedreht werden. Damit kann das Ambosselement der Bewegung der Stofflagenbahn angepasst werden, so dass die Stofflagenbahn und das Ambosselement im Bereich der Sonotrode relativ zueinander etwa stillstehen. Dies ermöglicht eine Schweißverbindung besonders hoher Güte.

Es wird vorgeschlagen, dass das Ambosselement zwischen zwei Ultraschallschweißvorgängen mit einer anderen Umfangsgeschwindigkeit als die Geschwindigkeit der Stofflagenbahn gedreht wird. Dies ermöglicht eine Einstellung der Länge der zu fertigenden Einzelstücke. Wenn das Ambosselement zwischen den Schweißvorgängen eine geringere Geschwindigkeit hat, so entstehen längere Abstände zwischen den Schweißstellen und im umgekehrten Abfall werden die Abstände verkürzt.

Als Variante der Erfindung können bei einer vollen Umdrehung des Ambosselements mehrere separate Schweißvorgänge durchgeführt werden. Dadurch kann das Ambosselement wenigstens zwischen den Schweißvorgängen langsamer bewegt werden.

Vorzugsweise kann als Schweißstelle eine mäanderförmige Schweißnaht hergestellt werden. Die Mäanderform ist als Solltrennstelle relativ gut durch Zugbeanspruchung zu trennen.

Günstigerweise kann das Ambosselement geheizt werden. Dies verbessert die Güte der Schweißverbindung.

Besonders vorteilhaft können die Stofflagen nahe der Schweißstelle an mindestens einer beabstandeten Verfestigungsstelle durch Ultraschweißen lösbar miteinander verbunden werden. Die Verfestigungsstelle sorgt für eine weitere Verbindung zwischen den Stofflagen, die jedoch unter Kraftaufwand lösbar ist. Die Verfestigung erfolgt ebenfalls durch ein ansatzweises Ultraschallverschweißen, allerdings in einer Art und Weise, dass diese Verbindung ohne Zerstörung der Stofflagen wieder lösbar ist. Dies gewährleistet eine Erhöhung der Reißfestigkeit der Schweißstelle, da beim Auftreten von Trennkräften zwischen den beiden Stofflagen zunächst die Energie zum Lösen der Verfestigungsstelle aufgenommen wird, bevor die Schweißstelle belastet wird. Optisch lässt sich mit der Verfestigungsstelle der Eindruck einer breiteren Naht erzeugen, obwohl die eigentliche sichere Schweißverbindung nur an der extrem dünnen Schweißstelle vorliegt.

Gemäß einer besonderen Ausführungsform kann die Verfestigungsstelle gleichzeitig in einem Arbeitsschritt mit dem Erzeugen der Schweißstelle erzeugt werden. Dies gewährleistet eine hohe Produktionsgeschwindigkeit.

Besonders günstig kann vor und hinter der Schweißstelle je mindestens eine Verfestigungsstelle erzeugt werden. In diesem Fall ist nach dem Trennen in Einzelstücke jede Schweißstelle mit einer eigenen Verfestigungsstelle versehen.

Als Variante der Erfindung kann als Verfestigungsstelle eine mäanderförmige Verfestigungsnaht hergestellt werden. Die Naht hat eine schmale Schweißbreite, wobei sich die Mäanderform aber insgesamt über eine relativ große Breite erstreckt, über welche die beiden Stofflagen lösbar miteinander verbunden sind. Damit wird die Verfestigungsstelle stabil und ist eine wirksame Kraftentlastung für die eigentliche Schweißnaht. Auch rein optisch scheint durch die Mäanderform eine insgesamt breitere Schweißnaht vorzuliegen, welche jedoch durch das Lösen der Verfestigungsstelle verschmälert werden kann, bis nur noch die dauerhafte schmale Schweißnaht an der Seitenkante des Produkts vorhanden ist.

In besonderer Weise können die Stofflagenbahnen nach dem Ultraschallschweißen in einem separaten Arbeitsschritt an der Solltrennstelle in Einzelstücke getrennt werden, wobei die Stofflagenbahnen eines Einzelstücks an der Schweißstelle miteinander verbunden bleiben. Somit kann das Trennen in Einzelstücke separat gesteuert von dem kontinuierlichen Prozess mit Ultraschweißen durchgeführt werden, so dass für das Ultraschallschweißen eine hohe Produktionsgeschwindigkeit beibehalten bleibt. Da der Schweißvorgang schon eine Solltrennstelle zum Durchtrennen vorgesehen hat, ist es im nachfolgenden Trennvorgang einfach und mit hoher Geschwindigkeit möglich, die Einzelstücke abzutrennen. Obwohl die schon ursprünglich sehr dünne Schweißstelle dabei in der Mitte als Solltrennstelle durchtrennt wird, bleibt bei jedem Einzelstück die verbleibende Einzelkante eine sichere Schweißverbindung mit hoher Festigkeit, die aber erstaunlich weich ist.

Denkbar kann die Trennung durch Zugbeanspruchung etwa in Längsrichtung der Stofflagenbahn erfolgen. Dies lässt sich beispielsweise durch Spannen der Bahnen zwischen zwei Rollenspalten erfolgen, bei welchen die Rollen des einen Spalts eine andere Geschwindigkeit als die Rollen des anderen Spalts besitzen.

Die eingangs genannte Aufgabe wird erfindungsgemäß auch mit einer Vorrichtung zum Durchführen des Verfahrens nach Anspruch 1 gelöst, mit einer Ultraschall-Arbeitsstation, welcher mindestens zwei Stofflagen fortlaufend zuführbar sind, von welchen mindestens eine Stofflage einen thermoplastischen Materialanteil aufweist, wobei eine Ultraschall-Sonotrode und ein drehbar gelagertes Ambosselement einen Ultraschall-Spalt bilden, an welchem die Stofflagen durch Ultraschallschweißen miteinander verbindbar und die Schweißstelle zu einer Solltrennstelle schwächbar ist.

Mit dieser Vorrichtung lässt sich das zuvor geschilderte Verfahren durchführen und die dazu geschilderten Vorteile erreichen. Die Stofflagen können kontinuierlich in den Ultraschall-Spalt zwischen Ambosselement und Sonotrode eingeführt werden. Durch Drehung des Ambosselementes kann das Verfahren fortlaufend mit hohen Geschwindigkeiten betrieben werden. Dabei wird die Schweißstelle bereits durch das Ultraschallschweißen zu einer Solltrennstelle geschwächt, an welcher die Stofflagen später in die Einzelstücke mit untereinander verbundenen Stofflagen trennbar ist.

Gemäß einer besonderen Ausführungsform kann die Umfangsgeschwindigkeit des Ambosselements der Geschwindigkeit der Stofflagen selektiv anpassbar sein. Im Bereich des Ultraschallspaltes kann die Geschwindigkeit des Ambosselements beispielsweise der Geschwindigkeit der Stofflagenbahn angepasst werden. Wird das Ambosselement in den übrigen Bereichen schneller oder langsamer gedreht, so werden dementsprechend die Abstände zweier Schweißstellen auf der Stofflagenbahn kürzer oder länger und somit die Größe des Produkts bestimmt.

Vorzugsweise kann der Drehantrieb des Ambosselements einen Servoantrieb aufweisen. Mit Hilfe des Servoantriebs lässt sich in Abhängigkeit von bestimmten Parametern, z.B. mechanische Parameter wie Winkelstellung des Ambosselementes oder Vorschubgeschwindigkeit der Stofflagenbahn, die Drehung des Ambosselements so steuern, dass der gewünschte Abstand zwischen den Schweißstellen eingehalten wird und das Ambosselement im Bereich des Ultraschallspalts mit der gewünschten Geschwindigkeit gedreht wird, während es dazwischen auch mit anderen Geschwindigkeiten gedreht werden kann.

Es wird vorgeschlagen, dass mehrere Schweißkanten über den Umfang des Ambosselements verteilt angeordnet sind. Damit lassen sich bei einer Rotation des Ambosselements mehrere Schweißstellen erzeugen.

Möglicherweise kann eine Schweißkante des Ambosselements mäanderförmig ausgebildet sein. Die Mäanderform lässt sich als Solltrennstelle mit mäßigem Kraftaufwand trennen und stellt trotzdem eine wirksame Schweißverbindung der Stofflagen dar.

Gegebenenfalls kann das Ambosselement beheizbar ausgebildet sein. Damit kann zusätzlich über das Ambosselement Wärme zum Verbessern der Schweißgüte zugeführt werden.

Gemäß einer speziellen Ausführungsform kann nahe der Schweißkante des Ambosselements mindestens eine Verfestigungskante zum lösbaren Verbinden der Stofflagen mittels Ultraschallschweißens vorgesehen sein. Mit Hilfe der Verfestigungskante können die Stofflagen mit Hilfe der Sonotrode lösbar miteinander verbunden werden. Diese Verbindung ist im Gegensatz zu der dauerhaften Verbindung der Schweißstelle durch mäßigen Kraftaufwand lösbar. Die beiden Stofflagen werden nur ansatzweise miteinander verschweißt. Man kann dies auch als eine Art Verprägen bezeichnen. Werden die Stofflagen mit mäßigem Kraftaufwand belastet, so ist die dauerhafte Schweißstelle von dieser Kraft entlastet, bis die Verfestigungsstelle gelöst ist. Die Verfestigungsstelle hat im Gebrauch die Funktion einer entlastenden Raststelle oder Rastlinie.

Besonders vorteilhaft kann unmittelbar vor und hinter der Schweißkante eine Verfestigungskante vorgesehen sein. Wird die Schweißstelle als Solltrennstelle durchtrennt, so weist jedes Einzelprodukt nahe der Produktkante eine entsprechende Verfestigungsstelle auf.

Besonders vorteilhaft kann der lichte Spalt zwischen der Schweißkante und der Sonotrode geringer sein als der lichte Spalt zwischen der Verfestigungskante und der Sonotrode. Durch den geringeren Spalt wird zwischen der Schweißkante und der Sonotrode eine sehr wirksame dauerhafte Schweißverbindung hergestellt. Durch den größeren Abstand zwischen der Verfestigungskante und der Sonotrode ist die Schweißverbindung der Verfestigungsstelle geringer und mit mäßigem Kraftaufwand lösbar.

Gemäß einer bevorzugten Ausführungsform kann die Verfestigungskante mehrere beabstandete Prägenoppen aufweisen. Die Prägenoppen bilden ausgezeichnete Punkte zum Ausbilden einer lösbaren Ultraschallschweißverbindung, wobei die Stofflagen in diesem Bereich ausreichend weich bleiben.

Als Variante der Erfindung kann nach der Ultraschall-Arbeitsstation eine Trennstation vorgesehen sein, an welcher die Stofflagenbahnen an der Solltrennstelle in Einzelstücke getrennt werden, wobei die Stofflagenbahnen eines Einzelstücks an der Schweißstelle miteinander verbunden bleiben. Die Trennstation vollführt die nachfolgende Trennung an der Solltrennstelle, wobei die Schweißstelle in ausreichender Stärke an dem Rand jedes Einzelstücks verbleibt und die Stofflagenbahnen jedes Einzelstücks dauerhaft miteinander verbindet. Durch die separate Ausbildung der Trennstation nach der Ultraschall-Arbeitsstation kann die Ultraschall-Arbeitsstation weiter kontinuierlich mit hoher Produktionsgeschwindigkeit betrieben werden.

Mit dem erfindungsgemäßen Verfahren und der zugehörigen Vorrichtung wird ein mehrlagiges Produkt aus mindestens zwei Stofflagen erreicht, von denen wenigstens eine Stofflage einen thermoplastischen Materialanteil aufweist, wobei die Stofflagen an wenigstens einer Stelle des Produkts über eine Ultraschall-Schweißstelle stoffschlüssig miteinander verbunden sind und die Ultraschall-Schweißstelle gleichzeitig als Teil einer durch Ultraschallschweißen erzeugte Solltrennstelle ausgebildet ist, welche in Folge ihres anschließenden Durchtrennens eine Seitenkante des mehrlagigen Produkts bildet.

Dies Produkt hat eine Schweißstelle mit ausreichender Festigkeit, wobei die Schweißstelle ein Teil einer Solltrennstelle ist, welche durch das Ultraschallweißen erzeugt wurde. Obwohl diese Schweißstelle zum Schaffen von einzelnen mehrlagigen Produkten durchtrennt wurde, hat sie ausreichende Festigkeit. Der verbleibende Teil der Schweißstelle bildet nach dem Durchtrennen eine Seitenkante des mehrlagigen Produkts, so dass die Stofflagen wirksam am Rand des Produkts zusammengehalten werden. Die Schweißstelle ist extrem dünn und reißfest, aber gleichzeitig ausreichend weich.

Es wird vorgeschlagen, dass die Ultraschallschweißstelle mäanderförmig ausgebildet ist. Mit der Mäanderform wird die Schweißstelle über die Höhe der Mäanderlinie hinweg etwas flächig verteilt ausgebildet, obwohl die Schweißstelle selbst schmal ausgebildet ist.

In besonderer Weise kann die Höhe des Mäanders etwa 1 bis 4 mm betragen.

Besonders vorteilhaft können die Stofflagen nahe der ultraschallverschweißten Seitenkante lösbar über mindestens eine ultraschallverschweißte Versteifungsstelle miteinander verbunden sind. Die Versteifungsstelle bildet eine Entlastung für die Schweißstelle. Wenn die Lagen auseinandergezogen werden, so wird zunächst die Versteifungsstelle belastet. Sie kann mit mäßigem Kraftaufwand gelöst werden. Erst danach wird die Schweißstelle belastet. Die Versteifungsstelle bildet eine Art Raststelle, welche Energie aufnimmt bevor die Schweißstelle belastet wird.

Vorzugsweise kann die Versteifungsstelle mäanderförmig ausgebildet sein.

Gemäß einer besonderen Ausführungsform kann die Versteifungsstelle parallel zu der Ultraschallschweißstelle verlaufend vorgesehen sein.

Ausführungsbeispiele der Erfindung sind in der Zeichnung dargestellt und werden nachstehend erläutert. Es zeigen:
- Fig. 1: eine Prinzipskizze einer Produktionslinie für das erfindungsgemäße Verfahren und die erfindungsgemäße Vorrichtung,
- Fig. 2: eine Seitenansicht einer erfindungsgemäßen Ultraschall-Arbeitsstation,
- Fig. 3: eine um 90° gegenüber Figur 2 gedrehte gerade Draufsicht auf die erfindungsgemäße Ultraschallstation von Figur 2,
- Fig. 4: eine teilweise Seitenansicht der Kontur einer Ambosswalze gemäß einer ersten Ausführungsform für eine erfindungsgemäße Ultraschall-Arbeitsstation,
- Fig. 5: eine gerade Draufsicht auf eine Ambosswalze gemäß einer zweiten Ausführungsform der Erfindung,
- Fig. 6: eine gerade Draufsicht auf eine Ambosswalze gemäß einer dritten Ausführungsform der Erfindung,
- Fig. 7: zwei mehrlagige Produkte nach dem Trennvorgang und
- Fig. 8: einen Vertikalschnitt durch ein erfindungsgemäßes mehrlagiges Produkt längs der Schnittlinie VIII-VIII in Figur 7.

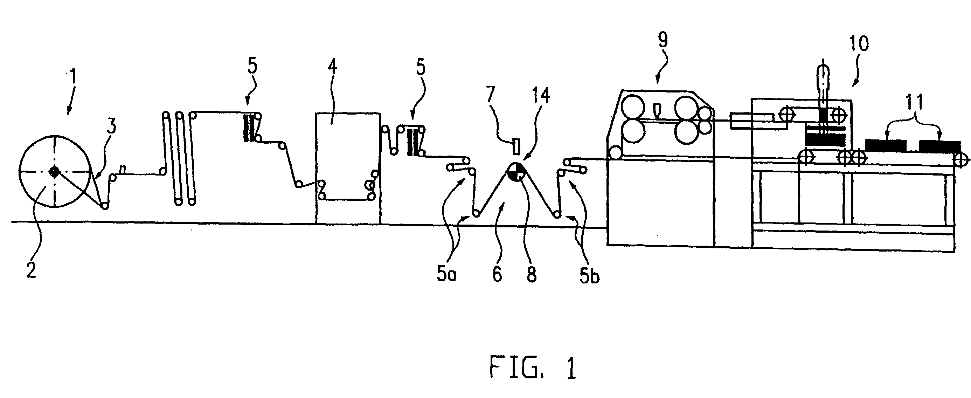

Figur 1 zeigt schematisch eine erfindungsgemäße Produktionslinie zum Herstellen mehrlagiger Produkte. Eine Abrollstation 1 weist eine Endlosrolle mit einer aufgewickelten flexiblen Stofflagenbahn 3 auf. Alternativ können auch mehrere Abrollstationen 1 verwendet werden, je nach Anzahl der Stofflagenbahnen 3: Für jede Abrollstation 1 ist je nach Produkt jede der in Figur 1 aufgeführten Stationen, welche nachfolgend näher beschrieben werden, bis zu einer Ultraschallarbeitsstation 6 erforderlich. Auf jeder Abrollstation 1 befindet sich eine Endlosrolle mit einer aufgewickelten flexiblen Stofflagenbahn 3.

Die Stofflagenbahnen 3 werden abgerollt und laufen über mehrere Walzen die Produktionslinie. Nach der Abrollstation können sie durch eine oder mehrere Spann-, Speicher- und/oder Falzvorrichtung 4 laufen, welche in Figur 1 blockartig dargestellt ist. Damit können die Stofflagenbahnen in gewünschter Spannung zugeführt werden. Wahlweise werden sie über einen durch mehrere Walzen gebildeten labyrinthartigen Speicher geführt. In einer Falzvorrichtung können die Stofflagenbahnen umgefalzt werden, so dass sich die Anzahl der übereinanderliegenden Stofflagen erhöht.

Vor und hinter der Vorrichtung 4 durchlaufen die Stofflagenbahnen 3 eine Bahnsteuerung 5. Die Bahnsteuerung 5 weist eine Breitstreckwalze, einen Tänzer und eine Seitenkantensteuerung auf. Anschließend durchlaufen die Stofflagenbahnen 3 einen ersten Teil einer Zugkraftregelung 5a.

Danach ist eine Ultraschall-Arbeitsstation 6 vorgesehen, welcher mehrere Stofflagenbahnen 3 parallel übereinanderliegend zugeführt werden. Diese Arbeitsstation 6 hat eine Ultraschall-Sonotrode 7, welche mit einem Booster, einem Schallkopf und einem Hochfrequenzgenerator verbunden ist. Gegenüber der Sonotrode 7 ist eine rotierende Ambosswalze 8 vorgesehen, die wahlweise mit einer nicht dargestellten Heizung versehen sein kann.

Nach der Ultraschall-Arbeitsstation 6 durchlaufen die jetzt miteinander verbundenen Stofflagen 3 einen zweiten Teil einer Zugkraftregelung 5b. Die Zugkraftregelung 5a und 5b sind aufeinander abgestimmt und schließen zwischen sich die Ultraschall-Arbeitsstation 6 ein. Somit sind die Stofflagenbahnen an der Ultraschall-Station stets korrekt gespannt.

Anschließend werden die verschweißten Stofflagenbahnen einer Trennstation 9 zugeführt, an welcher die Bahnen in Einzelstücke getrennt werden, wobei die Trennung längs einer als Solltrennstelle ausgebildeten Schweißnaht erfolgt.

Nach der Trennstation werden die Einzelstücke einer Stapelstation 10 zugeführt, in welcher sie in Stapel 11 aufeinandergelegt werden.

Von den der Ultraschall-Arbeitsstation 6 zugeführten Stofflagen hat wenigstens eine Stofflage einen thermoplastischen Materialanteil, wobei aber wahlweise auch alle Stofflagen aus thermoplastischen Material bestehen können. Als Materialien sind gewebeartige Materialien, wie Gewebematerialien, sogenannte wovens, oder Vliesmaterialien, sogenannte non-wovens, einsetzbar.

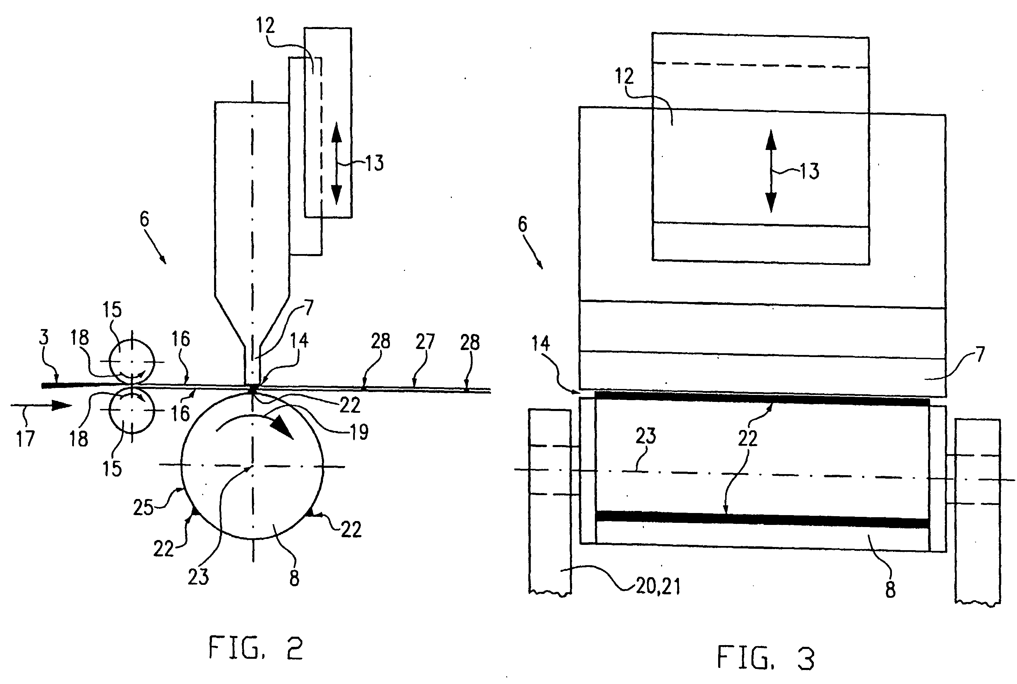

In den Figuren 2 und 3 ist schematisch eine Ultraschall-Arbeitsstation 6 mit der rotierenden Ambosswalze 8 und der Ultraschall-Sonotrode 7 dargestellt. Die Sonotrode 7 ist an einem Linearantrieb 12 vertikal in Richtung des Pfeils 13 verschiebbar gelagert, so dass die Breite eines zwischen der Sonotrode 7 und der Ambosswalze 8 gebildeten Spalts 14 eingestellt werden kann.

Eingangs der Arbeitsstation 6 sind zwei Zufuhrwalzen dargestellt, zwischen welchen zwei Stofflagen 16 parallel zueinander in Vorschubrichtung 17 zugeführt werden. Die Drehrichtungen der Zufuhrwalzen 15 und der Ambosswalzen 8 sind durch Pfeile 18, 19 gekennzeichnet.

Die Ambosswalze 8 ist mit einem Drehantrieb 20 verbunden, welche einen Servomotor 21 aufweist.

Über den Umfang der Walze sind jeweils drei Schweißkanten 22 gleichmäßig verteilt. Die Schweißkanten 22 erstrecken sich parallel zu der Walzenachse 23.

In Figur 3 werden dem Spalt 14 zwei parallele Stoffbahnen 16 zugeführt und dort an ausgezeichneten Schweißstellen 28 miteinander ultraschallverschweißt. Nach der Arbeitsstation 6 sind die Stofflagen noch parallel zueinander, aber die Produkte sind anhand der Schweißstelle 28 gebildet, wenn auch noch miteinander verbunden.

Als Stofflagen kann z.B. ein Polypropylen-Vlies mit einem spezifischen Gewicht von 43 g/m² verwendet werden. Die Breite des zu fertigenden Produkts auf der Walze hat in diesem Fall ca. 300 mm. Der Spalt 14 beträgt etwa 0,005 bis 0,05 mm, je nach Anzahl der Stofflagen, Material und gewünschte Stärke der Schweißstelle. Die Länge der Walze beträgt in diesem Fall ca. 350 mm.

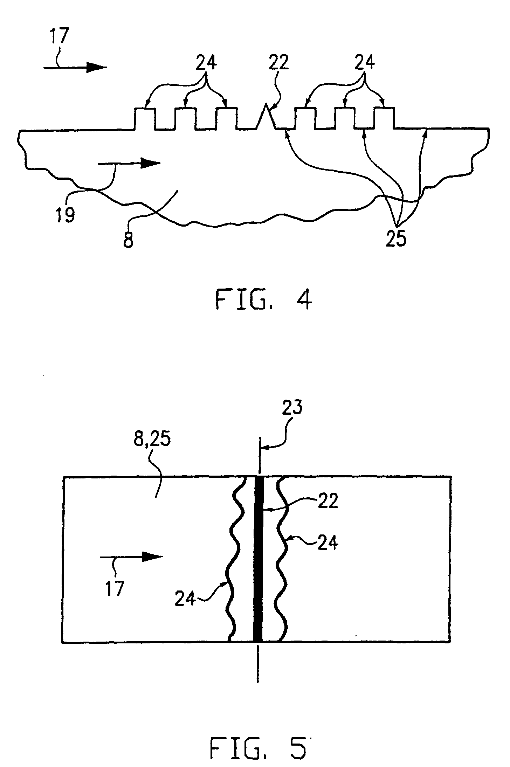

Figur 4 zeigt in vergrößerter Ansicht eine Teilkontur einer ersten Ausführungsform einer Ambosswalze 8 mit einer mittig angeordneten Schweißkante 22, welche etwa dreieckigen Querschnitt hat. In Vorschubrichtung 17 gesehen sind vor und hinter der Schweißkante 22 beabstandet jeweils drei Verfestigungskanten 24 vorgesehen, welche sich von dem Walzenumfang hervor erstrecken. Die Höhe der Schweißkante 22 gemessen von der übrigen Walzenoberfläche 25 ist größer als die Höhe der Verfestigungskanten 24. Somit ist der sich zwischen der Sonotrode und der Schweißkante 22 einstellende Spalt geringer als der sich zwischen der Sonotrode und den Verfestigungskanten 24 einstellende Spalt.

Figur 5 zeigt eine gerade Draufsicht auf eine Ambosswalze gemäß einer zweiten Ausführungsform der Erfindung. Parallel zur Walzenachse 23 erstreckt sich eine Schweißkante 22. Etwa parallel dazu ist in Vorschubrichtung 17 gesehen vor und hinter der Schweißkante 22 je eine mäanderförmige Verfestigungskante 24 beabstandet dazu vorgesehen.

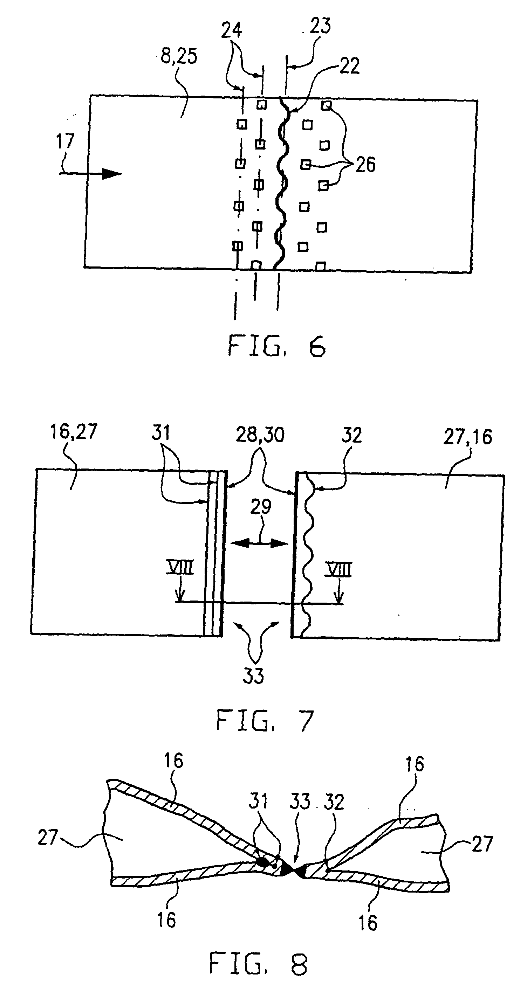

Figur 6 zeigt eine gerade Draufsicht auf einen Ausschnitt einer Ambosswalze 8 gemäß einer dritten Ausführungsform der Erfindung. Auf der Walzenoberfläche 25 ist eine sich mäanderförmig parallel zur Walzenachse 23 erstreckende Schweißkante 22 vorgesehen. Parallel dazu verlaufen Verfestigungskanten 24, welche die Form von beabstandet auf einer Linie zueinander angeordnete Prägenoppen 26 aufweisen. Bezüglich der Höhe der Verfestigungskanten 24 zur Höhe der Schweißkante 22 gilt das zu Figur 4 Gesagte.

In Figur 7 sind zwei einzelne mehrlagige Produkte nach dem Durchtrennen der Schweißstelle dargestellt. Die Produkte wurden in Richtung des Pfeils 29 voneinander getrennt, wobei die als Solltrennstelle ausgebildete Schweißstelle 28 durchtrennt wurde und eine Seitenkante 30 des jeweiligen Produkts 27 bildet.

Bei einem Produkt sind innenseitig der Schweißstelle 28 zwei linienförmige Verfestigungsstellen 31 vorgesehen, während an dem anderen Produkt parallel zur Schweißkante innenseitig eine mäanderförmige Verfestigungslinie 32 vorgesehen ist.

Figur 8 zeigt einen Querschnitt durch die Produkte 27 der Figur 7, wenn diese noch an der Schweißstelle 28 miteinander verbunden sind. Die Schweißstelle 28 bildet hierbei eine Solltrennstelle 33, längs der die beiden Produkte dann voneinander getrennt und vereinzelt werden können. Es ist erkennbar, dass sich die Schweißstelle durch den Querschnitt beider Stofflagen 34 erstreckt, so dass die Stofflagen auch nach einem Trennen an der Solltrennstelle 33 dauerhaft miteinander verbunden bleiben. Die Versteifungsstellen 31, 32 hingegen sind nicht in gleicher Weise voll als Verschweißung ausgebildet, sondern halten vor allen Dingen die sich berührenden Oberflächen der Stofflagen 34 zusammen und sind unter mäßigem Kraftaufwand lösbar.

Die Zugfestigkeit der Solltrennstelle 33 ist geringer als die Zugfestigkeit der Stofflagen 34 jedes Einzelprodukts, so dass bei einer Zugbeanspruchung die Solltrennstelle durchtrennt wird, wie in Figur 7 dargestellt.

Im folgenden wird die Verfahrens- und Funktionsweise der in der Zeichnung dargestellten erfindungsgemäßen Ausführungsbeispiele näher erläutert.

Von der Endlosrolle 2 wird eine gewebeartige Stoffbahn mit thermoplastischem Materialanteil abgerollt und in der Falzvorrichtung 4 mehrlagig gefaltet. Alternativ können zwei verschiedene gewebeartige Stofflagenbahnen gegebenenfalls von zwei verschiedenen Endlosrollen 2 abgerollt werden und in dem weiteren Verlauf mehrlagig parallel zueinander geführt werden. Nach dem Passieren der Spann/Speicher/Falz- vorrichtung 4, bei einer entsprechenden Ausrichtung oder einem Schneiden der Seitenkanten, werden diese Stofflagen 16 der Ultraschall-Arbeitsstation 6 zugeführt und durch den Spalt hindurchgeführt.

Wenn eine Schweißkante 22 in dem Bereich der Sonotrode 7 zum Ultraschallschweißen angelangt, so ist die Ambosswalze 8 auf eine Umfangsgeschwindigkeit etwa gleich der Vorschubgeschwindigkeit der Stofflagen beschleunigt. In dem übrigen Bereich kann die Ambosswalze langsamer oder schneller gedreht werden, so dass über die Geschwindigkeitssteuerung der Walze die Länge der Produkte bzw. die Abstände der Schweißstellen eingestellt wird. Dies kann mit Hilfe des Servoantriebs 21 entsprechend gesteuert werden.

Die Breite des Spalts 14 wird je nach Anzahl der Lagen und der gewünschten Verschweißung eingestellt.

Durch das Ultraschallverschweißen wird eine sehr dünne Schweißnaht, in der Regel unter 1 mm Breite erzeugt. Diese Schweißnaht wird gleichzeitig geschwächt und bildet eine Solltrennstelle 33, an welcher später die Einzelprodukte voneinander getrennt werden können.

Nach der Ultraschall-Arbeitsstation 6 sind die Stofflagen miteinander verbunden, aber noch fortlaufend in einer Bahn angeordnet. Die Bahn wird anschließend der Trennstation 9 zugeführt. Dort werden die einzelnen Produkte voneinander getrennt, z.B. durch Zugbeanspruchung, aber wahlweise auch durch zusätzliches Schneiden. Dabei erfolgt die Trennung an der Solltrennstelle 33, wobei jedes Einzelprodukt als Seitenkante einen Teil der Schweißstelle 28 aufweist, an welcher die Stofflagen dauerhaft miteinander verbunden sind.

Anschließend werden die einzelnen Produkte in der Stapelstation 10 gestapelt.

Die an dem Produkt vorgesehene Schweißnaht ist äußerst dünn, in der Regel in einem Bereich von Zehnteln von Millimetern und ist trotzdem äußerst weich und geschmeidig.

Mit Hilfe der Verfestigungskanten 24 werden während des Ultraschallverschweißens Verfestigungsstellen nahe der Schweißstelle gebildet. Diese Verfestigungsstellen sind mit mäßigem Kraftaufwand lösbar und dienen als Raststelle und Entlastung der Schweißnaht. Äußerlich haben die Verfestigungsstellen den Eindruck als hätten die mehrlagigen Produkte in diesem Bereich eine Prägung, obwohl hier auch ein ansatzweises Verschweißen erfolgt.

Mit dem erfindungsgemäßen Verfahren und der zugehörigen Vorrichtung sind beispielsweise Kopfkissenbezüge, Kopfkissen, Waschhandschuhe, Standbodenbeutel, Schuhbeutel, Teebeutel und alle anderen Arten von Beutel, Briefumschläge und Tüten verschiedener Art herstellbar. Gegenüber herkömmlichen Verfahren erlaubt die Erfindung eine Erhöhung der Produktionsgeschwindigkeit etwa um den Faktor 6.

## Patentansprüche

1. Verfahren zum Herstellen mehrlagiger Produkte (27), wobei mindestens zwei Stofflagen (3), von welchen mindestens eine Stofflage (16) einen thermoplastischen Materialanteil aufweist, fortlaufend einer Ultraschall-Arbeitsstation (6) zugeführt werden, an welcher ein Ambosselement (8) rotierend gegenüber einer Ultraschall-Sonotrode (7) angetrieben wird, und die Stofflagen (16) in einem Arbeitsschritt gleichzeitig durch Ultraschallschweißen miteinander verbunden werden und die Schweißstelle (28) zu einer Solltrennstelle (33) geschwächt wird.

2. Verfahren nach Anspruch 1,
**dadurch gekennzeichnet,**
**dass** die Schweißstelle (28) bis zu einer Zugfestigkeit geschwächt, welche geringer ist als die Zugfestigkeit der nicht geschweißten Stofflagen (16).

3. Verfahren nach Anspruch 1 oder 2,
**dadurch gekennzeichnet,**
**dass** der Grad der Schwächung der Schweißstelle (28) über eine Veränderung des lichten Spaltes (14) zwischen der Ultraschall-Sonotrode (7) und dem Ambosselement (8) eingestellt wird.

4. Verfahren nach einem der vorhergehenden Ansprüche,
**dadurch gekennzeichnet,**
**dass** die Stofflagen (16) mit einer Bahngeschwindigkeit von etwa 70 bis 200 m/min, vorzugsweise 150 bis 200 m/min, der Ultraschall-Arbeitsstation (6) zugeführt werden.

5. Verfahren nach einem der vorhergehenden Ansprüche,
**dadurch gekennzeichnet,**
**dass** das Ambosselement (8) während des Ultraschall-Schweißvorgangs mit einer Umfangsgeschwindigkeit etwa entsprechend der Geschwindigkeit der Stofflagen (3) gedreht wird.

6. Verfahren nach einem der vorhergehenden Ansprüche,
**dadurch gekennzeichnet,**
**dass** das Ambosselement (8) zwischen zwei Ultraschall-Schweißvorgängen mit einer anderen Umfangsgeschwindigkeit als die Geschwindigkeit der Stofflagenbahn (3) gedreht wird.

7. Verfahren nach einem der vorhergehenden Ansprüche,
**dadurch gekennzeichnet,**
**dass** bei einer vollen Umdrehung des Ambosselements (8) mehrere separate Schweißvorgänge durchgeführt werden.

8. Verfahren nach einem der vorhergehenden Ansprüche,
**dadurch gekennzeichnet,**
**dass** als Schweißstelle (28) eine mäanderförmige Schweißnaht hergestellt wird.

9. Verfahren nach einem der vorhergehenden Ansprüche,
**dadurch gekennzeichnet,**
**dass** das Ambosselement (8) geheizt wird.

10. Verfahren nach einem der vorhergehenden Ansprüche,
**dadurch gekennzeichnet,**
**dass** die Stofflagen (16) nahe der Schweißstelle (28) an mindestens einer beabstandeten Verfestigungsstelle (31, 32) durch Ultraschallschweißen lösbar miteinander verbunden werden.

11. Verfahren nach Anspruch 10,
**dadurch gekennzeichnet,**
**dass** die Verfestigungsstelle gleichzeitig in einem Arbeitsschritt mit dem Erzeugen der Schweißstelle (28) erzeugt wird.

12. Verfahren nach Anspruch 10 oder 11,
**dadurch gekennzeichnet,**
**dass** vor und hinter der Schweißstelle (28) je mindestens eine Verfestigungsstelle (31, 32) erzeugt wird.

13. Verfahren nach einem der Ansprüche 10 bis 12,
**dadurch gekennzeichnet,**
**dass** als Verfestigungsstelle eine mäanderförmige Verfestigungsnaht (32) hergestellt wird.

14. Verfahren nach einem der vorhergehenden Ansprüche,
**dadurch gekennzeichnet,**
**dass** die Stofflagenbahn (16) nach dem Ultraschallschweißen in einem separaten Arbeitsschritt an der Solltrennstelle (33) in Einzelstücke (27) getrennt wird, wobei die Stofflagen (16) eines Einzelstücks (27) an der Schweißstelle (28) miteinander verbunden bleiben.

15. Verfahren nach Anspruch 14,
**dadurch gekennzeichnet,**
**dass** die Trennung durch Zugbeanspruchung etwa in Längsrichtung der Stofflagenbahn (3) erfolgt.

16. Vorrichtung zum Durchführen des Verfahrens nach Anspruch 1, mit einer Ultraschall-Arbeitsstation (6), welcher mindestens zwei Stofflagen (16) fortlaufend zuführbar sind, von welchen mindestens eine Stofflage (16) einen thermoplastischen Materialanteil aufweist, wobei eine Ultraschall-Sonotrode (7) und ein drehbar gelagertes Ambosselement (8) einen Ultraschall-Spalt (14) bilden, an welchem die Stofflagen (16) durch Ultraschallschweißen miteinander verbindbar und die Schweißstelle (28) zu einer Solltrennstelle (33) schwächbar ist.

17. Vorrichtung nach Anspruch 16,
**dadurch gekennzeichnet,**
**dass** die Umfangsgeschwindigkeit des Ambosselements (18) der Geschwindigkeit der Stofflagen (3) selektiv anpassbar ist.

18. Vorrichtung nach Anspruch 16 oder 17,
**dadurch gekennzeichnet,**
**dass** der Drehantrieb (20) des Ambosselements (8) einen Servoantrieb (21) aufweist.

19. Vorrichtung nach einem der Ansprüche 16 bis 18,
**dadurch gekennzeichnet,**
**dass** mehrere Schweißkanten (22) über den Umfang des Ambosselements verteilt angeordnet sind.

20. Vorrichtung nach einem der Ansprüche 16 bis 19,
**dadurch gekennzeichnet,**
**dass** eine Schweißkante (22) des Ambosselements (8) mäanderförmig ausgebildet ist.

21. Vorrichtung nach einem der Ansprüche 16 bis 20,
**dadurch gekennzeichnet,**
**dass** das Ambosselement (8) beheizbar ausgebildet ist.

22. Vorrichtung nach einem der Ansprüche 16 bis 21,
**dadurch gekennzeichnet,**
**dass** nahe der Schweißkante (22) des Ambosselements (8) mindestens eine Verfestigungskante (24) zum lösbaren Verbinden der Stofflagen (16) mittels Ultraschallschweißens vorgesehen ist.

23. Vorrichtung nach Anspruch 22,
**dadurch gekennzeichnet,**
**dass** unmittelbar vor und hinter der Schweißkante (22) eine Verfestigungskante (31, 32) vorgesehen ist.

24. Vorrichtung nach Anspruch 22 oder 23,
**dadurch gekennzeichnet,**
**dass** der lichte Spalt (14) zwischen der Schweißkante (22) und der Sonotrode (7) geringer ist als der lichte Spalt (14) zwischen der Verfestigungskante (24) und der Sonotrode (7).

25. Vorrichtung nach einem der Ansprüche 22 bis 24,
**dadurch gekennzeichnet,**
**dass** die Verfestigungskante (24) mehrere beabstandete Prägenoppen (26) aufweist.

26. Vorrichtung nach einem der Ansprüche 16 bis 25,
**dadurch gekennzeichnet,**
**dass** nach der Ultraschall-Arbeitsstation (6) eine Trennstation (9) vorgesehen ist, an welcher die Stofflagenbahn (3) an der Solltrennstelle (33) in Einzelstücke (27) getrennt wird, wobei die Stofflagen (16) eines Einzelstücks (27) an der Schweißstelle (28) miteinander verbunden bleiben.

## Claims

1. Method of manufacturing multilayer products (27), wherein at least two fabric layers (3), of which at least one fabric layer (16) comprises a thermoplastic material fraction, are fed continuously to an ultrasonic work station (6), at which an anvil element (8) is driven so as to rotate relative to an ultrasonic sonotrode (7), and the fabric layers (16) in one working step are simultaneously connected to one another by ultrasonic welding and the weld (28) is weakened to form a predetermined breaking point (33).

2. Method according to claim 1,
**characterized in**
**that** the weld (28) is weakened to a tensile strength lower than the tensile strength of the non-welded fabric layers (16).

3. Method according to claim 1 or 2,
**characterized in**
**that** the degree of weakening of the weld (28) is adjusted by varying the clear gap (14) between the ultrasonic sonotrode (7) and the anvil element (8).

4. Method according to one of the preceding claims,
**characterized in**
**that** the fabric layers (16) are fed at a web speed of approximately 70 to 200 m/min, preferably 150 to 200 m/min, to the ultrasonic work station (6).

5. Method according to one of the preceding claims,
**characterized in**
**that** during the ultrasonic welding operation the anvil element (8) is rotated at a peripheral speed approximately corresponding to the speed of the fabric layers (3).

6. Method according to one of the preceding claims,
**characterized in**
**that** between two ultrasonic welding operations the anvil element (8) is rotated at a different peripheral speed to the speed of the fabric layer web (3).

7. Method according to one of the preceding claims,
**characterized in**
**that** during a complete revolution of the anvil element (8) a plurality of separate welding operations are carried out.

8. Method according to one of the preceding claims,
**characterized in**
**that** as weld (28) a meander-shaped weld seam is produced.

9. Method according to one of the preceding claims,
**characterized in**
**that** the anvil element (8) is heated.

10. Method according to one of the preceding claims,
**characterized in**
**that** the fabric layers (16) are detachably connected to one another by ultrasonic welding close to the weld (28) at at least one spaced-apart strengthening point (31, 32).

11. Method according to claim 10,
**characterized in**
**that** the strengthening point is produced in one working step simultaneously with production of the weld (28).

12. Method according to claim 10 or 11,
**characterized in**
**that** upstream and downstream of the weld (28) in each case at least one strengthening point (31, 32) is produced.

13. Method according to one of claims 10 to 12,
**characterized in**
**that** as a strengthening point a meander-shaped strengthening seam (32) is produced.

14. Method according to one of the preceding claims,
**characterized in**
**that** after ultrasonic welding the fabric layer web (16) in a separate work step is separated at the predetermined separating point (33) into individual pieces (27), wherein the fabric layers (16) of an individual piece (27) remain connected to one another at the weld (28).

15. Method according to claim 14,
**characterized in**
**that** the separation is effected by tensile stress approximately in longitudinal direction of the fabric layer web (3).

16. Apparatus for effecting the method according to claim 1, comprising an ultrasonic work station (6), to which at least two fabric layers (16) are continuously feedable, of which at least one fabric layer (16) comprises a thermoplastic material fraction, wherein an ultrasonic sonotrode (7) and a rotatably mounted anvil element (8) form an ultrasonic gap (14), at which the fabric layers (16) are connectable to one another by ultrasonic welding and the weld (28) is weakenable to form a predetermined breaking point (33).

17. Apparatus according to claim 16,
**characterized in**
**that** the peripheral speed of the anvil element (18) is selectively adaptable to the speed of the fabric layers (3).

18. Apparatus according to claim 16 or 17,
**characterized in**
**that** the rotary drive (20) of the anvil element (8) comprises a servo drive (21).

19. Apparatus according to one of claims 16 to 18,
**characterized in**
**that** a plurality of welding edges (22) are arranged distributed over the periphery of the anvil element.

20. Apparatus according to one of claims 16 to 19,
**characterized in**
**that** a welding edge (22) of the anvil element (8) is of a meander-shaped design.

21. Apparatus according to one of claims 16 to 20,
**characterized in**
**that** the anvil element (8) is of a heatable design.

22. Apparatus according to one of claims 16 to 21,
**characterized in**
**that** close to the welding edge (22) of the anvil element (8) at least one strengthening edge (24) is provided for detachably connecting the fabric layers (16) by means of ultrasonic welding.

23. Apparatus according to claim 22,
**characterized in**
**that** immediately upstream and downstream of the welding edge (22) a strengthening edge (31, 32) is provided.

24. Apparatus according to claim 22 or 23,
**characterized in**
**that** the clear gap (14) between the welding edge (22) and the sonotrode (7) is smaller than the clear gap (14) between the strengthening edge (24) and the sonotrode (7).

25. Apparatus according to one of claims 22 to 24,
**characterized in**
**that** the strengthening edge (24) comprises a plurality of spaced-apart embossing knobs (26).

26. Apparatus according to one of claims 16 to 25,
**characterized in**
**that** provided downstream of the ultrasonic work station (6) is a separation station (9), at which the fabric layer web (3) is separated at the predetermined separating point (33) into individual pieces (27), wherein the fabric layers (16) of an individual piece (27) remain connected to one another at the weld (28).

## Revendications

1. Procédé destiné à la fabrication de produits multicouches (27), dans lequel au moins deux couches de matière (3), dont une couche de matière (16) au moins comporte une proportion de matière thermoplastique, sont amenées en continu vers un poste de travail à ultrasons (6), dans lequel un élément d'enclume (8) est entraîné en rotation par rapport à une sonotrode à ultrasons (7), les couches de matière (16) sont reliées simultanément entre elles en une seule phase de travail par un soudage par ultrasons, et le point de soudure (28) est affaibli en un point de séparation prédéterminé (33).

2. Procédé selon la revendication 1,
**caractérisé en ce que**
le point de soudure (28) est affaibli jusqu'à une résistance à la traction qui est inférieure à la résistance à la traction des couches de matière (16) non soudées.

3. Procédé selon la revendication 1 ou 2,
**caractérisé en ce que**
le degré d'affaiblissement du point de soudure (28) est réglé par une modification de la fente libre (14) entre la sonotrode à ultrasons (7) et l'élément d'enclume (8).

4. Procédé selon l'une quelconque des revendications précédentes,
**caractérisé en ce que**
les couches de matière (16) sont amenées au poste de travail à ultrasons (6) à une vitesse de bande de l'ordre de 70 à 200 m/min, de préférence de 150 à 200 m/min.

5. Procédé selon l'une quelconque des revendications précédentes,
**caractérisé en ce que**,
pendant le processus de soudage par ultrasons, l'élément d'enclume (8) tourne à une vitesse périphérique correspondant sensiblement à la vitesse des couches de matière (3).

6. Procédé selon l'une quelconque des revendications précédentes,
**caractérisé en ce que**,
entre deux processus de soudage par ultrasons, l'élément d'enclume (8) tourne à une autre vitesse périphérique que la vitesse de la bande de couches de matière (3).

7. Procédé selon l'une quelconque des revendications précédentes,
**caractérisé en ce que**
plusieurs processus de soudage séparés sont effectués pendant une rotation complète de l'élément d'enclume (8).

8. Procédé selon l'une quelconque des revendications précédentes,
**caractérisé en ce que**
un cordon de soudure en forme de méandre est réalisé en tant que point de soudure (28).

9. Procédé selon l'une quelconque des revendications précédentes,
**caractérisé en ce que**
l'élément d'enclume (8) est chauffé.

10. Procédé selon l'une quelconque des revendications précédentes,
**caractérisé en ce que**,
à proximité du point de soudure (28), les couches de matière (16) sont reliées entre elles par soudage par ultrasons de façon à pouvoir être dissociées au niveau d'au moins un point de renforcement (31, 32) espacé.

11. Procédé selon la revendication 10,
**caractérisé en ce que**
le point de renforcement est réalisé simultanément avec le point de soudure (28) en une seule phase de travail.

12. Procédé selon la revendication 10 ou 11,
**caractérisé en ce que**
au moins un point de renforcement (31, 32) est réalisé devant et derrière le point de soudure (28).

13. Procédé selon l'une quelconque des revendications 10 à 12,
**caractérisé en ce que**
un cordon de renforcement (32) en forme de méandre est réalisé en tant que point de renforcement.

14. Procédé selon l'une quelconque des revendications précédentes,
**caractérisé en ce que**
après le soudage par ultrasons, la bande de couches de matière (16) est dissociée dans une phase de travail séparée en pièces individuelles (27) au niveau du point de séparation prédéterminé (33), les couches de matière (16) d'une pièce individuelle (27) restant reliées entre elles au niveau du point de soudure (28).

15. Procédé selon la revendication 14,
**caractérisé en ce que**,
la dissociation est effectuée par une contrainte de traction exercée sensiblement dans la direction longitudinale de la bande de couches de matière (3).

16. Dispositif destiné à la mise en oeuvre du procédé selon la revendication 1, comportant un poste de travail à ultrasons (6) auquel peuvent être amenées en continu au moins deux couches de matière (16), dont une couche de matière (16) au moins comporte une proportion de matière thermoplastique, une sonotrode à ultrasons (7) et un élément d'enclume (8) monté en rotation formant une fente à ultrasons (14), au niveau de laquelle les couches de matière (16) peuvent être reliées entre elles par un soudage par ultrasons, et le point de soudure (28) pouvant être affaibli en un point de séparation prédéterminé (33).

17. Dispositif selon la revendication 16,
**caractérisé en ce que**
la vitesse périphérique de l'élément d'enclume (18) peut être adaptée de façon sélective à la vitesse des couches de matière (3).

18. Dispositif selon la revendication 16 ou 17,
**caractérisé en ce que**
l'entraînement en rotation (20) de l'élément d'enclume (8) comporte une servocommande (21).

19. Dispositif selon l'une quelconque des revendications 16 à 18,
**caractérisé en ce que**
plusieurs arêtes de soudure (22) sont réparties sur la périphérie de l'élément d'enclume.

20. Dispositif selon l'une quelconque des revendications 16 à 19,
**caractérisé en ce que**
une arête de soudure (22) de l'élément d'enclume (8) est réalisée en forme de méandre.

21. Dispositif selon l'une quelconque des revendications 16 à 20,
**caractérisé en ce que**
l'élément d'enclume (8) est agencé de façon à pouvoir être chauffé.

22. Dispositif selon l'une quelconque des revendications 16 à 21,
**caractérisé en ce que**,
au moins une arête de renforcement (24) est prévue à proximité de l'arête de soudure (22) de l'élément d'enclume (8) pour la liaison dissociable des couches de matière (16) au moyen de soudage par ultrasons.

23. Dispositif selon la revendication 22,
**caractérisé en ce que,**
une arête de renforcement (31, 32) est prévue directement devant et derrière l'arête de soudure (22).

24. Dispositif selon la revendication 22 ou 23,
**caractérisé en ce que**,
la fente libre (14) entre l'arête de soudure (22) et la sonotrode (7) est plus faible que la fente libre (14) entre l'arête de.renforcement (24) et la sonotrode (7).

25. Dispositif selon l'une quelconque des revendications 22 à 24,
**caractérisé en ce que**,
l'arête de renforcement (24) comporte plusieurs noppes d'estampage (26) espacées les unes des autres.

26. Dispositif selon l'une quelconque des revendications 16 à 25,
**caractérisé en ce que**
un poste de séparation (9) est prévu en aval du poste de travail à ultrasons (6), dans lequel la bande de couches de matière (3) est dissociée en pièces individuelles (27) au niveau du point de séparation prédéterminé (33), les couches de matière (16) d'une pièce individuelle (27) restant reliées entre elles au niveau du point de soudure (28).
